# EUROPEAN PATENT APPLICATION

(11) **EP 2 811 617 A1**
(43) Date of publication of application: **10.12.2014**
(21) Application number: 12867287.0
(22) Date of filing: 25.12.2012
(51) Int. Cl.: H02J 9/06

(54) **POWER SUPPLY SYSTEM**

(30) Priority: 31.01.2012 JP 2012018160
(71) Applicant: Panasonic Corporation, Kadoma-shi, Osaka 571-8501 (JP)
(72) Inventor: NISHI, Mariko, Osaka-shi Osaka 540-6207 (JP); INAKAGATA, Satoru, Osaka-shi Osaka 540-6207 (JP)
(74) Representative: Appelt, Christian W.
(86) International application number: PCT/JP2012/083382
(87) International publication number: WO 2013/114764

(57) **Abstract**

A power supply system includes a storage battery, a console, a detector and an illumination device. The console is used to switch an operation of the power supply system at least from an on-grid operation to an off-grid operation. The detector is configured to detect a power outage in a utility grid. The illumination device is configured, during the power outage, to be electrically connected to the storage battery to illuminate the console.

## Description

### Technical Field

The invention relates to a power supply system configured to selectively perform an on-grid operation for supplying electric power in connection to a utility grid and an off-grid operation for supplying electric power in disconnection from the utility grid.

### Background Art

For example, JP Pub. No. 2010-259170 (hereinafter referred to as "Document 1") discloses a power supply system configured to selectively perform an on-grid operation for supplying electric power with a distributed generator connected to a commercial utility grid and an off-grid operation for supplying electric power with the distributed generator disconnected from the commercial utility grid. Such a power supply system is to perform the on-grid operation during a normal time while receiving commercial power from the commercial utility grid and to perform the off-grid operation during a power outage while the commercial utility grid stops supplying the commercial power. Accordingly, it is necessary to switch from the on-grid operation to the off-grid operation when a power outage occurs in the commercial utility grid. The power supply system is to switch from the on-grid operation to the off-grid operation after a console receives an input of user's manual operation.

In the conventional power supply system, there is however a problem of difficulty in such a manual operation for switching from the on-grid operation to the off-grid operation in a case where an installation location of the console is dark during a power outage occurring in the commercial utility grid at night for example.

### Summary of Invention

It is an object of the present invention to provide a power supply system that enables a user to enter, in a bright state, a manual operation for switching from an on-grid operation to an off-grid operation during a power outage in a commercial utility grid.

The present invention is a power supply system that includes: a storage battery (92); a console (5) for switching an operation of the power supply system at least from an on-grid operation to an off-grid operation; a detector (4) configured to detect a power outage in a utility grid; and an illumination device (91) configured, during the power outage, to be electrically connected to the storage battery (92) to illuminate the console.

In an embodiment, the power supply system (1) is configured to selectively perform the on-grid operation for supplying electric power in connection to a commercial utility grid (95) and the off-grid operation for supplying electric power in disconnection from the commercial utility grid (95). The power supply system (1) further includes a power converter (2), a terminal for off-grid (33), a switch (7) and a circuit breaker for illumination (6). The power converter (2) is configured to receive electric power from the storage battery (92) to perform power conversion. The terminal for off-grid (33) is to be connected with a load (94) and configured to supply the load (94) with electric power obtained by the power conversion of the power converter (2) during the off-grid operation. The switch is configured to switch the operation of the power supply system (1) to the on-grid operation or the off-grid operation. The circuit breaker for illumination (6) is disposed along a power line for illumination (98) for supplying electric power from the power converter (2) to the illumination device (91) configured to illuminate an installation location of the console (5). The power line for illumination is provided separately from a power line (97) between the terminal for off-grid (33) and the load (94). The console (5) is configured to receive an input of a manual operation for allowing the switch to switch from the on-grid operation to the off-grid operation. The detector (4) is configured to detect a power outage in the commercial utility grid (95). The circuit breaker for illumination (6) is configured, if the detector (4) detects a power outage in the commercial utility grid (95), to electrically connect the power converter (2) and the illumination device (91) so that the power converter (2) supplies electric power to the illumination device (91) through the power line for illumination (98).

In an embodiment, an annunciator (8) is further provided. The annunciator is configured to provide an input method of the manual operation if the detector (4) detects a power outage in the commercial utility grid (95).

In an embodiment, the power supply system (1) further includes a first circuit breaker (32), a second circuit breaker (34), a power converter (2) and a third circuit breaker (6). The power converter (2) includes a first converter (21) and a second converter (22) and is connected between the storage battery (92) and the first and second circuit breakers (32 and 34). The third circuit breaker (6) is connected between the illumination device (91) and a junction of the first and second converters (21 and 22).

In an embodiment, the first converter (21) includes a first input-output terminal (211) connected to a side of the second converter (22), and a second input-output terminal (212) connected to a side of the storage battery (92). The first converter (21) is configured to receive electric power supplied to the first input-output terminal (211) to perform voltage conversion and then to supply electric power obtained by the voltage conversion to a side of the second input-output terminal (212), and also to receive electric power supplied to the second input-output terminal (212) to perform voltage conversion and then to supply electric power obtained by the voltage conversion to a side of the first input-output terminal (211). In addition, the second converter (22) includes a first input-output terminal (221) connected to a side of the first circuit breaker (32) and a side of the second circuit breaker (34), and a second input-output terminal (222) connected to a side of the first converter (21). The second converter (22) is configured to convert AC power supplied to the first input-output terminal (221) of the second converter (22) into DC power and then to supply the DC power to a side of the second input-output terminal (222) of the second converter (22), and also to convert DC power supplied to the second input-output terminal (222) of the second converter (22) into AC power and then to supply the AC power to a side of the first input-output terminal (221) of the second converter (22).

In an embodiment, the power supply system (1) further includes a controller (7) configured to control the power converter (2). The controller (7) is configured, during the power outage detected through the detector (4), to turn on the third circuit breaker (6) to electrically connect the illumination device (91) to the storage battery (92) through the first converter 21.

In an embodiment, the third circuit breaker (6) is configured, during the power outage detected through the detector (4), to be automatically turned on to electrically connect the illumination device (91) to the storage battery (92) through the first converter 21.

According to the present invention, the illumination device is to illuminate the installation location of the console during a power outage in the commercial utility grid, and it is accordingly possible for a user to perform a manual operation for switching from an on-grid operation to an off-grid operation in an illuminated state.

### Brief Description of Drawings

Preferred embodiments of the invention will now be described in further details. Other features and advantages of the present invention will become better understood with regard to the following detailed description and accompanying drawings where:
FIG. 1 is a block diagram of a power supply system in accordance with a first embodiment of the present invention;
FIG. 2 is a flow chart depicting an operation of the power supply system; and
FIG. 3 is a block diagram of a power supply system in accordance with a second embodiment of the present invention;

### Description of Embodiments

Each power supply system of the following embodiments is configured to selectively perform an on-grid operation for supplying electric power in connection to a utility grid and an off-grid operation for supplying electric power in disconnection from the utility grid. In an example, each power supply system is configured to selectively perform the on-grid operation for supplying electric power with a storage battery connected to a commercial utility grid and the off-grid operation for supplying electric power with the storage battery disconnected from the utility grid.

### (First Embodiment)

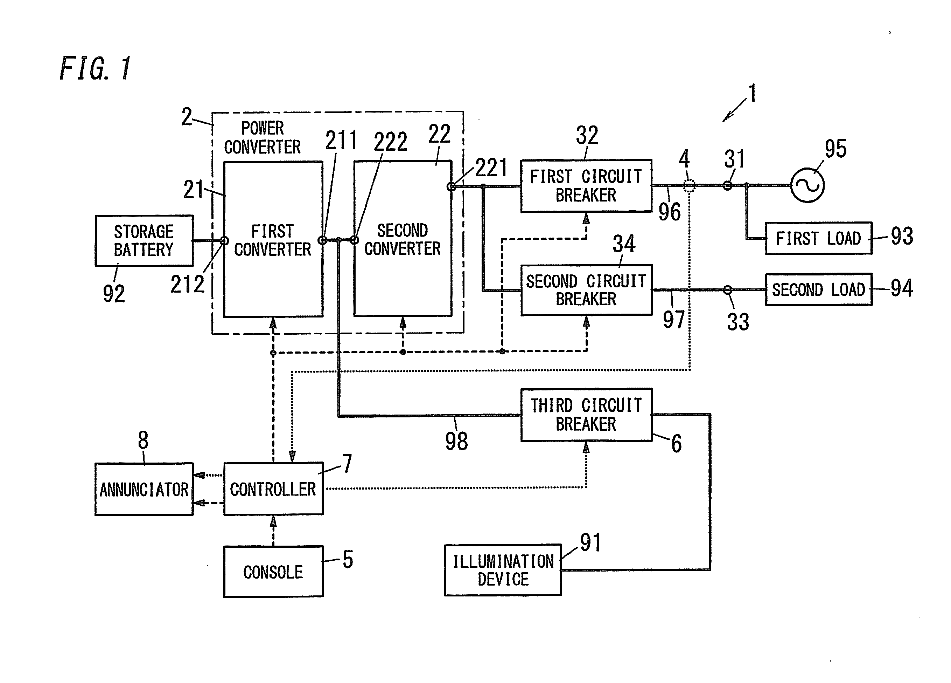

As shown in FIG. 1, a power supply system 1 of the first embodiment includes a storage battery 92, a power converter 2, a first terminal 31, a first circuit breaker 32, a second terminal 33, a second circuit breaker 34, a detector 4, a console 5, a third circuit breaker 6 and a controller 7. The power converter 2 is configured to receive electric power from the storage battery 92 to perform power conversion. The first terminal (a terminal for on-grid) 31 is connected to (at least) a first load 93 and adapted to supply the first load 93 with electric power obtained by the power conversion of the power converter 2 during the on-grid operation. The first circuit breaker (a circuit breaker for on-grid) 32 is configured to electrically connect and disconnect between the power converter 2 and the first terminal 31. The second terminal (a terminal for off-grid) 33 is connected to (at least) a second load 94 and adapted to supply the second load 94 with electric power obtained by the power conversion of the power converter 2 during the off-grid operation. The second circuit breaker (a circuit breaker for off-grid operation) 34 is configured to electrically connect and disconnect between the power converter 2 and the second terminal 33. The detector 4 is configured to detect a power outage in the utility grid. In the first embodiment, the detector 4 is configured to detect a power outage and a power restoration in a commercial utility grid 95. The console 5 is configured to receive an input of user's manual operation. The third circuit breaker (a circuit breaker for illumination) 6 is configured to electrically connect and disconnect between the power converter 2 and an illumination device 91. The controller 7 is configured to control the whole power supply system 1. In FIG. 1, each solid line represents a power line, each broken line represents a signal line for a control signal to be transmitted from the controller 7 in response to an input of a manual operation received with the console 5, or the like, and each dotted line represents a signal line for control (a detection signal) to be transmitted from the detector 4 at a time point of a power outage and a power restoration in the commercial utility grid 95.

In the embodiment, the power converter 2 constitutes a discharge and charge power conditioner along with all or part of the first terminal 31, the first circuit breaker 32, the second terminal 33, the second circuit breaker 34, the detector 4, the console 5, the third circuit breaker 6 and the controller 7.

The power supply system 1 of the embodiment is configured so that the illumination device 91 illuminates an installation location of the console 5 configured to receive an input of a manual operation for switching from the on-grid operation to the off-grid operation, before the off-grid operation is started with a power outage occurring in the commercial utility grid 95.

The illumination device 91 is an illumination device for power outage and used during a power outage in the commercial utility grid 95. The illumination device is disposed adjacent to the console 5. The illumination device 91 includes, for example, a light emitting diode(s) (an LED(s)), an organic electroluminescence device(s) (an organic EL devices(s)), or the like, and is configured to illuminate the installation location of the console 5 by receiving electric power (DC power) from the power converter 2 through the third circuit breaker 6.

Examples of the storage battery 92 include a nickel hydrogen battery, a lithium-ion battery, a lead-acid battery and the like. The storage battery 92 is to be charged by DC power obtained through the power converter 2 from commercial power of the commercial utility grid 95 during the on-grid operation.

The power converter 2 includes a first converter 21 and a second converter 22. The power converter 2 is configured to convert AC power from a side of the commercial utility grid 95 into DC power in accordance with an instruction of the controller 7 during charging of the storage battery 92. The power converter 2 is also configured to convert DC power from the storage battery 92 into AC power in accordance with an instruction of the controller 7 during discharging of the storage battery 92.

The first converter 21 is, e.g., a bidirectional DC-DC converter including a (two or more) switching device(s) (not shown), and configured to perform voltage conversion in accordance with ON and OFF control of the switching device during charging or discharging of the storage battery 92. For example, the first converter 21 includes a first input-output terminal 211 connected to a side of the second converter 22 and a second input-output terminal 212 connected to a side of the storage battery 92. The first converter 21 is configured to receive electric power supplied to the first input-output terminal 211 to perform voltage conversion by driving the switching device in accordance with charging control of the controller 7, and then supply the side of the second input-output terminal 212 with electric power obtained by the voltage conversion. The first converter 21 is also configured to receive electric power supplied to the second input-output terminal 212 to perform voltage conversion by driving the switching device in accordance with discharging control of the controller 7, and then supply the side of the first input-output terminal 211 with electric power obtained by the voltage conversion.

The second converter 22 is, e.g., a bidirectional inverter including two or more switching devices (not shown), and configured to perform AC-DC conversion and DC-AC conversion in accordance with ON and OFF control of the switching devices. The second converter 22 is configured to convert AC power of the commercial utility grid 95 into DC power during charging of the storage battery 92, and also to convert DC power of the first converter 21 into AC power during discharging of the storage battery 92. For example, the second converter 22 includes a first input-output terminal 221 connected to a side of the first circuit breaker 32 and a side of the second circuit breaker 34, and a second input-output terminal 222 connected to a side of the first converter 21. The second converter 22 is configured to convert AC power supplied to the first input-output terminal 221 into DC power by driving the switching devices in accordance with the charging control of the controller 7 and then to supply the DC power to the side of the second input-output terminal 222. The second converter 22 is also configured to convert DC power supplied to the second input-output terminal 222 into AC power by driving the switching devices in accordance with the discharging control of the controller 7 and then to supply the AC power to the side of the first input-output terminal 221. Examples of each switching device of the first converter 21 and the second converter 22 include an insulated gate bipolar transistor (IGBT) and the like.

The first circuit breaker 32 includes a first end electrically connected to the first terminal 31 and a second end electrically connected to the power converter 2 (the first input-output terminal 221). The first circuit breaker 32 is provided between the first terminal 31 and the power converter 2. The first circuit breaker 32 is configured, in accordance with instructions of the controller 7, to be turned on to electrically connect between the first terminal 31 and the power converter 2 during a normal time, and also to be turned off to electrically disconnect between the first terminal 31 and the power converter 2 during a power outage. In the normal time, commercial power is supplied from the commercial utility grid 95. In the power outage, the commercial utility grid 95 stops supplying commercial power.

The second circuit breaker 34 includes a first end electrically connected to the power converter 2 (the first input-output terminal 221) and an second end electrically connected to the second terminal 33. The second circuit breaker 34 is disposed between the power converter 2 and the second terminal 33. The second circuit breaker 34 is configured, in accordance with instructions of the controller 7, to be turned off to electrically disconnect between the power converter 2 and the second terminal 33 during a normal time, and also to electrically connect between the power converter 2 and the second terminal 33 during a power outage.

The detector 4 is configured, based on an on-grid voltage applied to a first power line 96 connected to the commercial utility grid 95, to detect a state of normal time in which commercial power is supplied from the commercial utility grid 95, or a state of power outage in which the commercial utility grid 95 stops supplying commercial power. In the normal time in which commercial power is supplied from the commercial utility grid 95, the on-grid voltage on the first power line 96 is a specified voltage (e.g., 100V or 200V). In the power outage in which the commercial utility grid 95 stops supplying commercial power, the on-grid voltage on the first power line 96 is OV. Therefore, the detector 4 is configured to detect a state of normal time if the on-grid voltage is in a specified voltage range, and to detect a state of power outage if the on-grid voltage is less than a lower limit of the specified voltage range. As a result, the detector 4 can detect a power outage and a power restoration in the commercial utility grid 95.

The detector 4 is configured, if detecting a power outage or a power restoration in the commercial utility grid 95, to supply the controller 7 with a detection signal as a detection result. For example, when detecting a power outage in the commercial utility grid 95, the detector 4 supplies the controller 7 with a detection signal of power outage information representing that a power outage in the commercial utility grid 95 has been detected. On the other hand, when detecting a power restoration in the commercial utility grid 95, the detector 4 supplies the controller 7 with a detection signal of power restoration information representing that a power restoration in the commercial utility grid 95 has been detected.

The console 5 includes, e.g., operation buttons, a touch panel or the like, and is adapted to receive instructions to be entered into the power supply system 1 by a user. That is, the console 5 is to receive inputs of various instructions by user's manual operations. Examples of inputs for instructions entered through the console 5 include an input of a manual operation for allowing the controller 7 to switch the operation of the power supply system 1 from the on-grid operation to the off-grid operation, and an input of a manual operation for allowing the controller 7 to switch the operation of the power supply system 1 from the off-grid operation to the on-grid operation.

The third circuit breaker 6 includes a first end electrically connected to the power converter 2 (a junction of the first converter 21 and the second converter 22) and a second end electrically connected to the illumination device 91. The third circuit breaker 6 is disposed along a second power line (a power line for illumination) 98 for supplying the illumination device 91 with electric power from the power converter 2 (the junction of the first converter 21 and the second converter 22). The second power line 98 is a power line provided separately from a second power line 97 between the second terminal 33 and the load 94. The third circuit breaker 6 is to be turned on to electrically connect between the power converter 2 and the illumination device 91 during a power outage in accordance with an instruction of the controller 7.

Here, a light source configured to be lit by DC power is employed as the illumination device 91. Accordingly, the second power line 98 is connected between the first converter 21 and the second converter 22, namely to a DC link thereof so that DC power from the power converter 2 is supplied to the illumination device 91. As a result, when the detector 4 detects a power outage in the commercial utility grid 95, the illumination device 91 receives DC power from the first converter 21 to be lit, thereby illuminating the installation location of the console 5.

The controller 7 functions as an operation switch configured to switch an operation of the power supply system 1 to the on-grid operation or the off-grid operation in response to a detection signal from the detector 4. If receiving power outage information from the detector 4 with the detector 4 detecting a power outage in the commercial utility grid 95, the controller 7 performs gate block with respect to the switching devices (not shown) of the second converter 22 and also to switch the first circuit breaker 32 from ON to OFF, thereby stopping the on-grid operation. If the console 5 then receives an input of user's manual operation, in accordance with the input the controller 7 releases the gate block with respect to the switching devices of the second converter 22 and also to switch the second circuit breaker 34 from OFF to ON, thereby allowing the off-grid operation. If the controller 7 then receives power restoration information from the detector 4 with the detector 4 detecting a power restoration in the commercial utility grid 95 as well as the console 5 receives an input of a manual operation for allowing the controller 7 to switch from the off-grid operation to the on-grid operation, in accordance with the input the controller 7 switches the second circuit breaker 34 from ON to OFF and also to switch the first circuit breaker 32 from OFF to ON, thereby switching from the off-grid operation to the on-grid operation.

The controller 7 of the embodiment not only functions as the operation switch but also functions as an illumination switch configured to switch the third circuit breaker 6 between ON and OFF. If the controller 7 receives power outage information from the detector 4 with the detector 4 detecting a power outage in the commercial utility grid 95, the controller 7 switches the third circuit breaker 6 from OFF to ON to electrically connect between the power converter 2 and the illumination device 91.

The third circuit breaker 6 of the embodiment is configured to be switched from OFF to ON to electrically connect between the power converter 2 and the illumination device 91 in accordance with an instruction of the controller 7. That is, when the detector 4 detects a power outage in the commercial utility grid 95, the third circuit breaker 6 electrically connects between the power converter 2 and the illumination device 91. As a result, the illumination device 91 receives electric power from the power converter 2 through not the second power line 97 but the third power line 98 to be lit, thereby illuminating the installation location of the console 5.

The controller 7 further functions as a discharge and charge controller configured to control discharging and charging of the storage battery 92 through the power converter 2. During charging of the storage battery 92, the controller 7 controls the power converter 2 so that AC power from a side of the commercial utility grid 95 is converted into DC power. For example, the controller 7 is configured to control the second converter 22 so that the second converter 22 converts AC power supplied to the first input-output terminal 221 into DC power to supply the DC power to the side of the second input-output terminal 222. The controller 7 is also configured to control the first converter 21 so that the first converter 21 receives electric power (DC power) supplied to the first input-output terminal 211 to perform voltage conversion to supply electric power obtained by the voltage conversion to the side of the second input-output terminal 212.

During discharging of the storage battery 92, the controller 7 controls the power converter 2 so that DC power from the storage battery 92 is converted into AC power. For example, the controller 7 is configured to control the first converter 21 so that the first converter 21 receives electric power (DC power) supplied to the second input-output terminal 212 to perform voltage conversion and then to supply electric power obtained by the voltage conversion to the side of the first input-output terminal 211. The controller 7 is also configured to control the second converter 22 so that the second converter 22 converts DC power supplied to the second input-output terminal 222 into AC power to supply the AC power to the side of the first input-output terminal 221.

The power supply system 1 of the embodiment further includes an annunciator 8 configured to provide operation procedures for manual operations with respect to the console 5.

The annunciator 8 is configured to provide an operation procedure for a manual operation for allowing the controller 7 to switch from the on-grid operation to the off-grid operation in accordance with an instruction of the controller 7 if the detector 4 detects a power outage in the commercial utility grid 95. The annunciator 8 may include a display (not shown) configured to display various information and a voice output device (not shown) configured to output various information using voice. For example, the display includes a liquid-crystal display (LCD), an organic EL display or the like, and is configured to display contents of the operation procedures for the manual operations in accordance with instructions of the controller 7. For example, the voice output device includes a speaker and the like, and is configured to output operation procedures for the manual operations using voice in accordance with instructions of the controller 7.

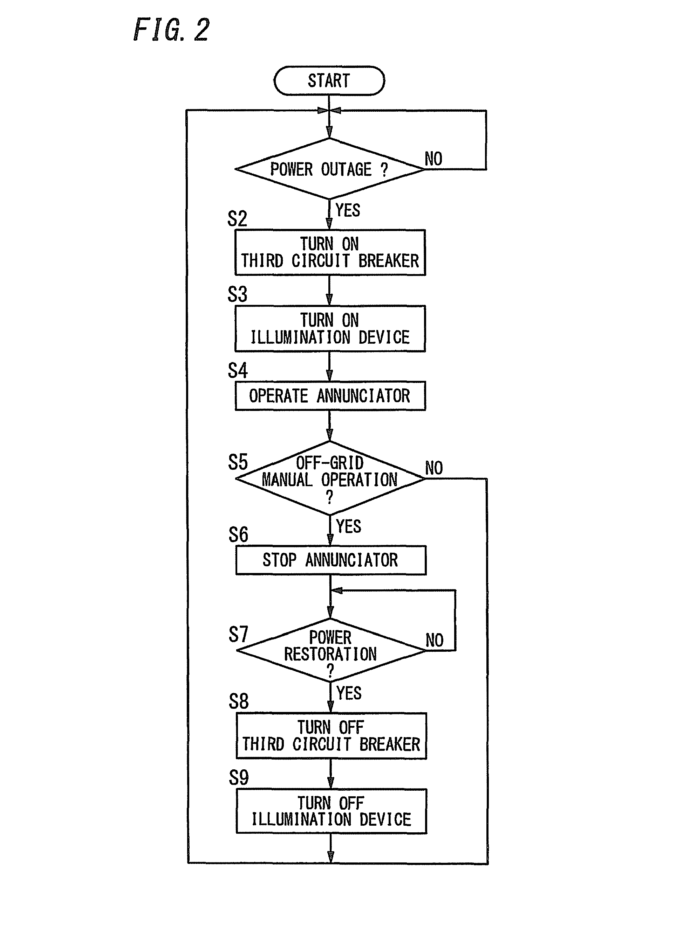

An operation of the power supply system 1 in the embodiment is now explained with reference to FIG. 2. In an initial state, the first circuit breaker 32 is kept on and the second and third circuit breakers 34 and 6 are kept off. That is, the power supply system 1 operates in the on-grid operation.

In such a state, when the detector 4 detects a power outage in the commercial utility grid 95 ("YES" at S1), the third circuit breaker 6 is switched from OFF to ON (S2) and the illumination device 91 is lit (S3). The annunciator 8 also provides the operation procedure for the manual operation for allowing the controller 7 to switch from the on-grid operation to the off-grid operation (S4). Until the on-grid operation is switched to the off-grid operation according to an input of user's manual operation received with the console 5 ("NO" at S5), the illumination device 91 is lit and the annunciator 8 continuously provides the operation procedure for the manual operation. If the console 5 receives user's manual operation and the on-grid operation is then switched to the off-grid operation ("YES" at S5), the annunciator 8 stops operating (S6). When the detector 4 then detects a power restoration in the commercial utility grid 95 ("YES" at S7), the third circuit breaker 6 is switched from ON to OFF (S8) and the illumination device 91 is unlit (S9). In short, the controller 7 switches on the third circuit breaker 6 to electrically connect the illumination device 91 and the storage battery 92 through the first converter 21 during the power outage detected through the detector 4. Unless the detector 4 detects a power restoration in the utility grid 95 ("NO" at S7), the third circuit breaker 6 is kept on and the illumination device 91 is kept lit.

In the power supply system 1 of the embodiment as mentioned above, when a power outage occurs in the commercial utility grid 95, the third circuit breaker 6 electrically connects between the power converter 2 and the illumination device 91, thereby allowing the illumination device 91 to illuminate the installation location of the console 5. As a result, even when a power outage occurs in the commercial utility grid 95 at night for example, a user can perform the manual operation for switching from the on-grid operation to the off-grid operation in a bright state.

In the power supply system 1 of the embodiment, when a power outage occurs in the commercial utility grid 95, the annunciator 8 provides the operation procedure for the manual operation for allowing the switch (the controller 7) to switch from the on-grid operation to the off-grid operation. As a result, even if a user does not know the operation procedure for the manual operation, the user can perform the manual operation securely and quickly.

### (Second Embodiment)

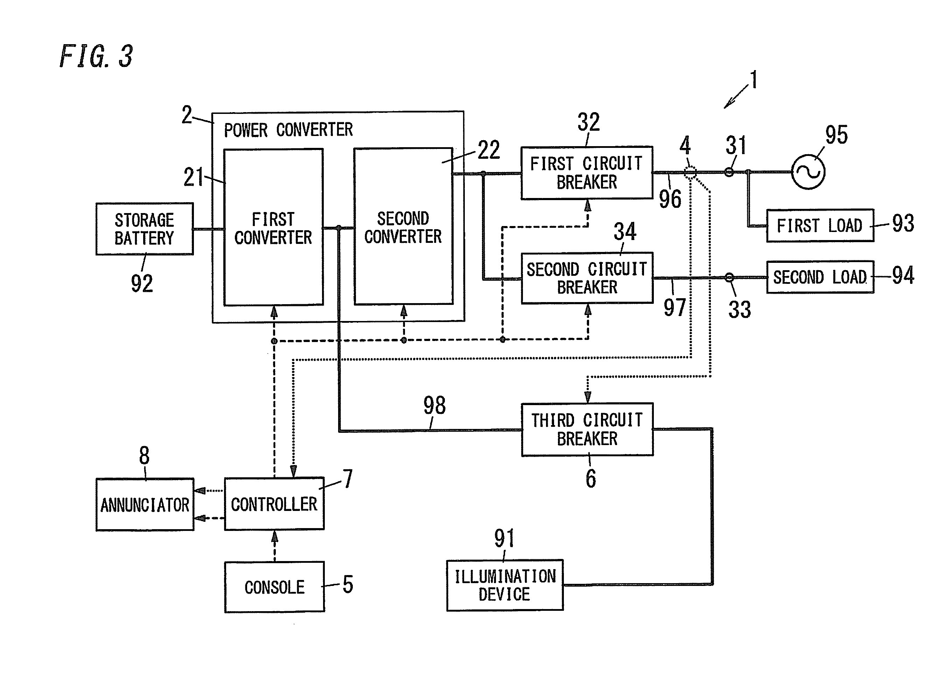

As shown in FIG. 3, a power supply system 1 of the second embodiment differs from the power supply system 1 of the first embodiment (see FIG. 1) in that a third circuit breaker 6 is configured to receive a detection result of a detector 4 therefrom to be automatically switched on and off. Like kind elements are assigned the same reference numerals as depicted in the first embodiment, and not described in detail herein. In FIG. 3, each solid line represents a power line, each broken line represents a signal line for a control signal to be transmitted from a controller 7 in response to a manual operation received through a console 5, or the like, and each dotted line represents a signal line for control (a detection signal) to be transmitted from the detector 4 at a time point of a power outage and a power restoration in a commercial utility grid 95.

The third circuit breaker 6 of the embodiment is configured to receive a detection result of the detector 4 therefrom. When receiving power outage information from the detector 4 with the detector 4 detecting a power outage in the commercial utility grid 95, the third circuit breaker 6 is switched from OFF to ON, thereby electrically connecting between a power converter 2 and an illumination device 91. When receiving power restoration information from the detector 4 with the detector 4 detecting a power restoration in the commercial utility grid 95, the third circuit breaker 6 is switched from ON to OFF, thereby electrically disconnecting between the power converter 2 and the illumination device 91. For example, the third circuit breaker 6 has normally closed contacts, and these contacts are turned on according to the power outage information (e.g., a LOW signal) received from the detector 4, and are turned off according to power restoration or energization information (a HIGH signal) received from the detector 4. That is, the third circuit breaker 6 of the embodiment can be automatically switched on and off with no instruction of the controller 7. In short, the third circuit breaker is configured to be automatically switched on to electrically connect the illumination device 91 and the storage battery 92 through the first converter 21 during a power outage detected with the detector 4.

Therefore, the controller 7 of the embodiment is configured to function as an operation switch and a discharge and charge controller, but is not required to function as an illumination switch.

An operation of the power supply system 1 in the embodiment is similar to the operation of the power supply system 1 in the first embodiment (see FIG. 2) except that the third circuit breaker 6 is turned on and off by receiving a detection result of the detector 4 therefrom.

In the power supply system 1 of the embodiment as mentioned above, the third circuit breaker 6 is turned on and off by receiving a detection result of the detector 4 therefrom. Accordingly, the power supply system 1 of the embodiment can operate the illumination device 91 by not a complicated method considering the controller 7 but a simple method. The processing load of the controller 7 can be reduced because the controller 7 is not required to control ON and OFF of the third circuit breaker 6.

In an embodiment, the power supply system 1 is configured to selectively perform an on-grid operation for supplying electric power with a distributed generator such as a solar array or a fuel cell connected to a utility grid and an off-grid operation for supplying electric power with the distributed generator disconnected from the utility grid.

In an example, the power supply system 1 is a grid-tied PV (photovoltaic) system with battery backup, and includes a solar array as a distributed generator. In this example, the distributed generator is connected to a power converter 2 in FIG. 1 or 2.

In an example, the distributed generator includes a solar array (not shown) and a DC/DC converter (not shown) connected to an output of the solar array, and an output of the DC/DC converter in the distributed generator is connected to the junction of the first converter 21 and the second converter 22. In this example, output power of the solar array is supplied to the storage battery 92 through the DC/DC converter of the distributed generator and the first converter 21, and also supplied to the side of the first circuit breaker 32 and the side of the second circuit breaker 34 through the DC/DC converter of the distributed generator and the second converter 22. Electric power supplied to the side of the first circuit breaker 32 is supplied to the first load 93 or allowed to flow back to the commercial utility grid 95. Electric power supplied to the side of the second circuit breaker 34 can be supplied to the second load 94.

## Claims

1. A power supply system, comprising:
a storage battery;
a console for switching an operation of the power supply system at least from an on-grid operation to an off-grid operation;
a detector configured to detect a power outage in a utility grid; and
an illumination device configured, during the power outage, to be electrically connected to the storage battery to illuminate the console.

2. The power supply system of claim 1, wherein
the power supply system is configured to selectively perform the on-grid operation for supplying electric power in connection to a commercial utility grid and the off-grid operation for supplying electric power in disconnection from the commercial utility grid,
the power supply system further comprises:
a power converter configured to receive electric power from the storage battery to perform power conversion;
a terminal for off-grid that is to be connected with a load and configured to supply the load with electric power obtained by the power conversion of the power converter during the off-grid operation;
a switch configured to switch the operation of the power supply system to the on-grid operation or the off-grid operation; and
a circuit breaker for illumination that is disposed along a power line for illumination for supplying electric power from the power converter to the illumination device configured to illuminate an installation location of the console, the power line for illumination being provided separately from a power line between the terminal for off-grid and the load,
the console is configured to receive an input of a manual operation for allowing the switch to switch from the on-grid operation to the off-grid operation,
the detector is configured to detect a power outage in the commercial utility grid, and
the circuit breaker for illumination is configured, if the detector detects a power outage in the commercial utility grid, to electrically connect the power converter and the illumination device so that the power converter supplies electric power to the illumination device through the power line for illumination.

3. The power supply system of claim 2, further comprising an annunciator configured to provide an input method of the manual operation if the detector detects a power outage in the commercial utility grid.

4. The power supply system of claim 1, further comprising:
a first circuit breaker;
a second circuit breaker;
a power converter comprising a first converter and a second converter and is connected between the storage battery and the first and second circuit breakers; and
a third circuit breaker that is connected between the illumination device and a junction of the first and second converters.

5. The power supply system of claim 4, wherein
the first converter comprises a first input-output terminal connected to a side of the second converter, and a second input-output terminal connected to a side of the storage battery,
the first converter is configured
to receive electric power supplied to the first input-output terminal to perform voltage conversion and then to supply electric power obtained by the voltage conversion to a side of the second input-output terminal, and also
to receive electric power supplied to the second input-output terminal to perform voltage conversion and then to supply electric power obtained by the voltage conversion to a side of the first input-output terminal,
the second converter comprises a first input-output terminal connected to a side of the first circuit breaker and a side of the second circuit breaker, and a second input-output terminal connected to a side of the first converter, and
the second converter is configured
to convert AC power supplied to the first input-output terminal of the second converter into DC power and then to supply the DC power to a side of the second input-output terminal of the second converter, and also
to convert DC power supplied to the second input-output terminal of the second converter into AC power and then to supply the AC power to a side of the first input-output terminal of the second converter.

6. The power supply system of claim 4, further comprising a controller configured to control the power converter, wherein
the controller is configured, during the power outage detected through the detector, to turn on the third circuit breaker to electrically connect the illumination device to the storage battery through the first converter 21.

7. The power supply system of claim 4, wherein the third circuit breaker is configured, during the power outage detected through the detector, to be automatically turned on to electrically connect the illumination device to the storage battery through the first converter 21.
